# EUROPEAN PATENT APPLICATION

(11) **EP 2 529 895 A1**
(43) Date of publication of application: **05.12.2012**
(21) Application number: 10843930.8
(22) Date of filing: 22.10.2010
(51) Int. Cl.: B25F 5/00, B25B 21/00, B25B 23/14, H02K 7/10

(54) **POWER TOOL**

(30) Priority: 25.01.2010 JP 2010013454; 25.01.2010 JP 2010013449
(71) Applicant: Makita Corporation, Anjo-shi, Aichi 446-8502 (JP)
(72) Inventor: MATSUNAGA Yutaka, Anjo-shi Aichi 446-8502 (JP); TOKUNAGA Manabu, Anjo-shi Aichi 446-8502 (JP); HIRABAYASHI Shinji, Anjo-shi Aichi 446-8502 (JP)
(74) Representative: Kramer - Barske - Schmidtchen
(86) International application number: PCT/JP2010/068750
(87) International publication number: WO 2011/089766

(57) **Abstract**

A hand-held power tool comprises a motor (111), an output section (117) which is rotationally driven by the motor (111), and an output change section (145, 151, 161, 171) which changes the output of the output section in a stepless manner while normally driving the motor (111). The hand-held power tool is improved so that the output of the output section during working can be smoothly controlled.

## Description

### FIELD OF THE INVENTION

The present invention relates to a hand-held power tool which is capable of controlling an output of an output part driven by a motor.

### BACKGROUND OF THE INVENTION

Japanese non-examined laid-open Patent Publication No. 2004-237422 discloses a hand-held power tool which is capable of controlling an output (rotation speed) of a spindle driven by a motor. The known power tool is a driver drill for use in a screw tightening operation and has a three-speed gear mechanism comprising a planetary gear mechanism and a speed changing part that is rectilinearly slid in an axial direction by a user's operation from the outside of a housing. When the user slides this speed changing part and selects a mode in which one of two internal gears of the planetary gear mechanism is irrotationally fixed to the housing, the spindle is rotated at low speed. When the user selects a mode in which the other internal gear is irrotationally fixed to the housing, the spindle is rotated at medium speed. Further, when the user selects a mode in which either one of the internal gears is connected to a carrier while both of the internal gears are allowed to rotate, the spindle is rotated at high speed.
Further, a mechanical clutch mechanism is provided between the planetary gear mechanism and the spindle. This clutch mechanism interrupts power transmission from the planetary gear mechanism to the spindle when the tightening torque of the spindle exceeds a predetermined torque value.

The mechanical clutch mechanism is constructed to transmit power by engagement between a ball and a claw, or between claws, and interrupts power transmission by releasing the engagement. With such a construction, abrupt torque change is caused before and after clutch movement and accompanied by undesirable or uncomfortable movement.

### DISCLOSURE OF THE INVENTION

### PROBLEMS TO BE SOLVED BY THE INVENTION

Accordingly, it is an object of the present invention to provide an improved hand-held power tool which is capable of smoothly controlling an output of an output part during operation.

### MEANS FOR SOLVING THE PROBLEM

In order to solve the above-described problem, a power tool according to a preferred embodiment of the present invention has a motor, an output part that is rotationally driven by the motor, and an output changing part that steplessly changes the speed of output of the output part while steadily driving the motor. The manner of "steplessly changing the speed of output of the output part" in the present invention includes a manner of changing (increasing) the speed of output of the output part from the speed of steady drive of the motor to high speed, a manner of changing (reducing) it from high speed to low speed, and a manner of reducing it to zero. Further, when the speed of output of the output part is increased or reduced, it widely includes a manner in which the speed is increased or reduced at a constant rate, and a manner in which it changes at varying rates. The "power tool" in the present invention is typically represented by a tightening tool such as a driver and a wrench for use in an operation of tightening screws or bolts, but may widely include a drill for use in a drilling operation, a hammer and a hammer drill for use in a chipping operation and a drilling operation, and a circular saw and an electric cutter for use in a cutting operation in woodworking or metalworking.

According to the present invention, by provision of the construction in which the output changing part can steplessly change the speed of output of the output part in a steady drive state in which the rotation speed of the motor is held constant, when performing a predetermined operation by using the power tool, the user can smoothly change the speed of the motor without being subjected to shock and can change the speed of the output according to the operating state such as an operation at high-speed output and an operation at low-speed output. Further, according to the present invention, by provision of the construction in which the speed of output of the output part can be steplessly changed, for example, when a predetermined load acts on the output part, the speed of output of the output part can be controlled to zero. Therefore, for example, in the power tool in which a predetermined operation is performed by rotation of the output part, a mechanical clutch device can be omitted which is provided to cut off power when torque acting on the output part exceeds a predetermined torque. As a result, the power tool can be made simple in structure and reduced in size.

According to a further embodiment of the present invention, the output changing part is a rotation control part that controls rotation of a reaction force receiving member for receiving a reaction force of the output. The manner of "controlling rotation of a reaction force receiving member" here includes a manner of maintaining the reaction force receiving member in a stopped state, a manner of allowing the reaction force receiving member to freely rotate and a manner of actively rotating the reaction force receiving member. Further, the direction of rotation of the reaction force receiving member may be the same direction as the direction of rotation of the output part, or it may be the opposite direction thereto.

According to the present invention, by provision of the construction in which the rotation control part controls rotation of the reaction force receiving member, for example, when the reaction force receiving member is rotated in the same direction as the direction of rotation of the output part, the rotation speed of the output part can be increased. When the reaction force receiving member is rotated in the opposite direction from the direction of rotation of the output part, the rotation speed of the output part can be reduced, or reduced to zero. Further, when the reaction force receiving member is held in the stopped state, the rotation speed of the output part can be maintained at the speed of steady drive.

According to a further embodiment of the present invention, the power tool has a power tool body that houses the motor. Further, the motor has a rotor that rotationally drives the output part and a stator that generates rotational moment in the rotor and is rotatably mounted to the power tool body. The reaction force receiving member is a stator and controls rotation of the output part by controlling rotation of the stator.
According to the present invention, the speed of output of the output part can be steplessly changed via the rotor by controlling rotation of the stator which serves as the reaction force receiving member when the rotor is rotated.

According to a further embodiment of the present invention, the power tool has a stator rotational resistance control part that controls rotation of the stator by controlling rotational resistance of the stator to the power tool body. The manner of "controlling rotational resistance" here is referred to as a manner of applying rotational resistance to the stator so as to prevent the stator from rotating with respect to the power tool body, and a manner of releasing rotational resistance applied to the stator so as to allow the stator to rotate. Further, the stator rotational resistance control part for applying rotational resistance suitably includes a means using a frictional force (a brake) and a means using a rotation stopper.
According to the present invention, when rotational resistance is applied to the stator by the stator rotational resistance control part such that the stator is fixed with respect to the power tool body, the output part can be steadily driven by the rotor of the motor. On the other hand, when the rotational resistance to the stator is released such that the stator is separated from the power tool body, the stator is allowed to freely rotate, so that the output part can be slowed down and stopped via the rotor.

According to a further embodiment of the present invention, the power tool has a driving source for driving the stator. According to the present invention, the speed of output of the output part can be steplessly changed by actively driving the stator by the driving source. Specifically, when the stator is rotationally driven in the same direction as the rotor, the rotation speed of the rotor can be further increased. On the other hand, when the stator is rotationally driven in the opposite direction from the rotor, the rotation speed of the rotor can be reduced to zero. An auxiliary motor can be suitably used as the "driving source" in the present invention.

According to a further embodiment of the present invention, the power tool has a state detecting part that detects a predetermined operating state of the power tool. When the state detecting part detects the predetermined operating state of the power tool, the state detecting part controls rotation of the stator such that the speed of output of the output part is reduced to zero. The "predetermined operating state" in the present invention typically represents an operating state in which load acting on the output part is changed from low load to high load. For example, if the present invention is applied to a screw tightening machine, it represents an operating state in which a head of a screw (bolt) or one axial end surface of a nut is seated on the workpiece. Further, if the present invention is applied to a hammer drill, it represents an operating state in which a tool bit is engaged in the workpiece and locked. The "state detecting part" in the present invention typically represents a torque sensor.
According to the present invention, the operation can be finished or interrupted by controlling rotation of the stator such that the speed of output of the output part is reduced to zero based on a detection signal from the state detecting part.

According to a further embodiment of the present invention, the power tool is an electric tightening tool which performs a fastener tightening operation on a workpiece by rotation of a tool bit around its axis and has a driving shaft that is rotationally driven by the motor, the output part in the form of a driven shaft to which a tool bit can be coupled, and a speed reducing mechanism that transmits rotation of the driving shaft to the driven shaft. The "electric tightening tool" in the present invention includes a driver for use in an operation of tightening fasteners in the form of screws, and a wrench for use in an operation of tightening fasteners in the form of bolts (nuts).

According to the further embodiment of the present invention, the speed reducing mechanism has an internal gear that is rotatably supported, a sun gear that is rotationally driven by the driving shaft, and a planetary gear that is connected to the driven shaft and revolves around the sun gear in engagement with the sun gear and the internal gear. Further, the output changing part comprises an internal gear control part which controls rotation of the driven shaft by controlling rotation of the internal gear. The manner of "controlling rotation of the internal gear" in the present invention includes a manner of locking (braking) the internal gear, a manner of allowing rotation of the internal gear by releasing the lock of the internal gear, and a manner of actively rotating the internal gear.

When the motor is driven to perform a fastener tightening operation, the rotating output ofthe motor is transmitted from the sun gear which is rotationally driven by the driving shaft to the driven shaft via the planetary gear which revolves around the sun gear in engagement with both the sun gear and the internal gear. According to the present invention, the operating state can be switched by the internal gear control part between a locked state in which the internal gear is prevented from rotating and a rotation allowed state in which the internal gear is allowed to rotate, or between the locked state and an active driving state, so that the rotation speed of the driven shaft can be steplessly changed. Thus, the fastener tightening operation by the tool bit can be smoothly performed.
Further, according to the present invention, by provision of the construction in which the speed of output of the driven shaft can be steplessly changed, for example, when a predetermined torque acts on the driven shaft, the speed of rotation of the driven shaft can be controlled to zero. Therefore, a mechanical clutch device can be omitted which may be provided to cut off power when torque acting on the driven shaft exceeds the predetermined torque. As a result, the power tool can be made simple in structure and reduced in size.

According to a further embodiment of the present invention, rotation speed of the driven shaft is controlled to be changed from high speed to low speed when the fastener is turned by the tool bit and seated on the workpiece. According to the present invention, abrupt torque change of the driven shaft is not caused, so that the fastener tightening operation can be properly performed.

According to a further embodiment of the present invention, the power tool has a power tool body that houses the motor. Further, the internal gear control part is formed by an internal gear rotational resistance control part which controls rotational resistance ofthe internal gear to the power tool body. The manner of "controlling rotational resistance" here is referred to as a manner of applying rotational resistance to the internal gear so as to prevent the internal gear from rotating with respect to the power tool body and a manner of releasing rotational resistance applied to the internal gear so as to allow the internal gear to rotate. Further, the "internal gear rotational resistance control part" suitably includes a means using frictional force (a brake) and a means using a rotation stopper.

According to the present invention, when the internal gear is fixed to the power tool body by applying rotational resistance to the internal gear, the driven shaft can be steadily driven at a set rotation speed. On the other hand, when the internal gear is separated from the power tool body by releasing rotational resistance applied to the internal gear, the reaction force receiving member in the form of the internal gear is allowed to rotate, so that the rotation speed of the driven shaft can be steplessly reduced finally to zero. With such a construction, abrupt torque change of the driven shaft is not caused, so that the tightening operation is smoothly performed.

According to a further embodiment of the present invention, the internal gear control part is a driving source that rotationally drives the internal gear. The "driving source" in the present invention typically represents an auxiliary motor.

According to the present invention, the rotation speed of the driven shaft can be changed by actively driving the internal gear by the driving source. Specifically, when the internal gear is rotationally driven in the opposite direction from the direction of rotation of the sun gear, the rotation speed of the driven shaft can be further increased. Further, when the internal gear is rotationally driven in the same direction as the direction of rotation of the sun gear, the rotation speed of the driven shaft can be reduced to zero. With such a construction, for example, in the process of a tightening operation from start to finish, in a stage from start to halfway, the driven shaft is driven at higher speed than that of steady drive of the motor. Thus, the tightening operation is quickly performed, so that the time required for the tightening operation can be shortened. Then, in a stage near the end of the tightening operation, the rotation speed of the driven shaft is controlled to be steplessly reduced such that it becomes zero upon finish of the tightening operation. Thus, the tightening operation can be smoothly performed. Further, the manner of steplessly reducing the rotation speed of the driven shaft widely includes the manner in which the speed is reduced at a constant rate and a manner in which the speed is reduced at varying rates.

According to a further embodiment of the present invention, the power tool has a torque detecting part that detects a torque value in a rotation transmitting path from the internal gear to the tool bit. According to the present invention, by provision of the construction in which detection of the torque value is made in a rotation transmitting path from the internal gear to the tool bit, the torque detecting part can be easily installed.

According to a further embodiment of the present invention, the driving source rotationally drives the internal gear such that the rotation speed of the driven shaft is reduced to zero when the torque detecting part detects a predetermined set torque value. The time "when the torque detecting part detects a set torque value" in the present invention typically represents the time when it detects change of the tightening torque which is caused when the fastener is seated on the workpiece during tightening operation, or the time when it detects abnormal increase of the tightening torque of the fastener for any cause halfway through the tightening operation.

Therefore, according to the present invention, when seating of the fastener on the workpiece is detected during fastener tightening operation, or when fastener tightening trouble is caused halfway through the tightening operation, the internal gear is rotationally driven by the driving source such that the rotation speed of the driven shaft is reduced to zero, so that the fastener tightening operation can be finished or interrupted.

### EFFECT OF THE INVENTION

According to the present invention, an improved hand-held power tool is provided which can smoothly control an output of an output part during operation. Other objects, features and advantages of the present invention will be readily understood after reading the following detailed description together with the accompanying drawings and the claims.

### BRIEF DESCRIPTION OF THE DRAWINGS

FIG. 1 is a sectional side view showing an entire structure of a screwdriver according to a first embodiment of the present invention.
FIG. 2 is a sectional side view showing an essential part of the screwdriver.
FIG. 3 is a view for illustrating operation of a micro motor which controls rotation of a stator (magnet) of a driving motor, in which FIG. 3(A) shows a state in which the micro motor controls the stator so as not to rotate (to be held in a stopped state), FIG. 3(B) shows a state in which the micro motor is rotationally driven in a direction that increases the rotation speed of a rotor, and FIG. 3(C) shows a state in which it is rotationally driven in a direction that reduces the rotation speed of the rotor.
FIG. 4 is a sectional side view showing a structure of a screwdriver according to a second embodiment of the present invention.
FIG. 5 is a view for illustrating operation of a braking device, in which FIG. 5 (A) shows a brake activated state and FIG. 5(B) shows a brake released state.
FIG. 6 is a front view of a brake shoe.
FIG. 7 is a side view of the brake shoe.
FIG. 8 is a sectional side view showing an entire structure of a screwdriver according to a third embodiment of the present invention.
FIG. 9 is a sectional view showing an essential part of the screwdriver.
FIG. 10 is a view for illustrating operation of a micro motor which controls rotation of an internal gear of a planetary gear mechanism, in which FIG. 10(A) shows a state in which the micro motor controls the internal gear so as not to rotate (to be held in a stopped state), FIG. 10(B) shows a state in which the micro motor is rotationally driven in a direction that increases the rotation speed of a spindle, and FIG. 10(C) shows a state in which it is rotationally driven in a direction that reduces the rotation speed of the spindle.
FIG. 11 is a view for illustrating that a distance sensor is used to control the micro motor during tightening operation, and showing a state in which a head of a fastener is not yet seated on a workpiece.
FIG. 12 is a view for illustrating that the distance sensor is used to control the micro motor during tightening operation, and showing a state in which a head of a fastener is seated on a workpiece.
FIG. 13 is a sectional side view showing a structure of a screwdriver according to a fourth embodiment of the present invention.
FIG. 14 is a view for illustrating operation of a friction clutch device, in which FIG. 14(A) shows an engaged state (on state) of a clutch and FIG. 14(B) shows a disengaged state (off state) of the clutch.

### REPRESENTATIVE EMBODIMENT OF THE INVENTION

Each of the additional features and method steps disclosed above and below may be utilized separately or in conjunction with other features and method steps to provide and manufacture improved power tools and methods for using such power tools and devices utilized therein. Representative examples of the present invention, which examples utilized many of these additional features and method steps in conjunction, is now described in detail with reference to the drawings. This detailed description is merely intended to teach a person skilled in the art further details for practicing preferred aspects of the present teachings and is not intended to limit the scope of the invention. Only the claims define the scope of the claimed invention. Therefore, combinations of features and steps disclosed within the following detailed description may not be necessary to practice the invention in the broadest sense, and are instead taught merely to particularly describe some representative examples of the invention, which detailed description will now be given with reference to the accompanying drawings.

### (First Embodiment of the Invention)

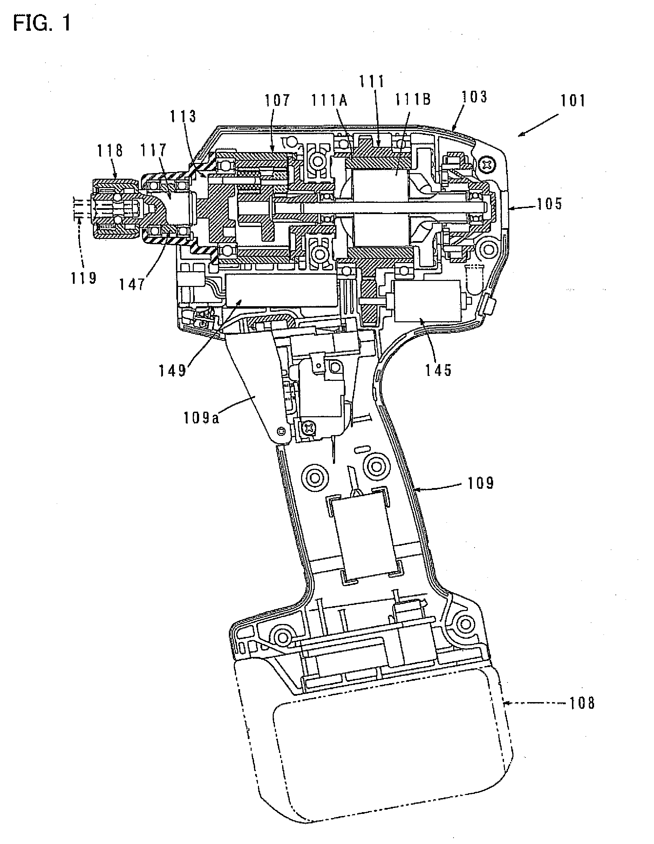

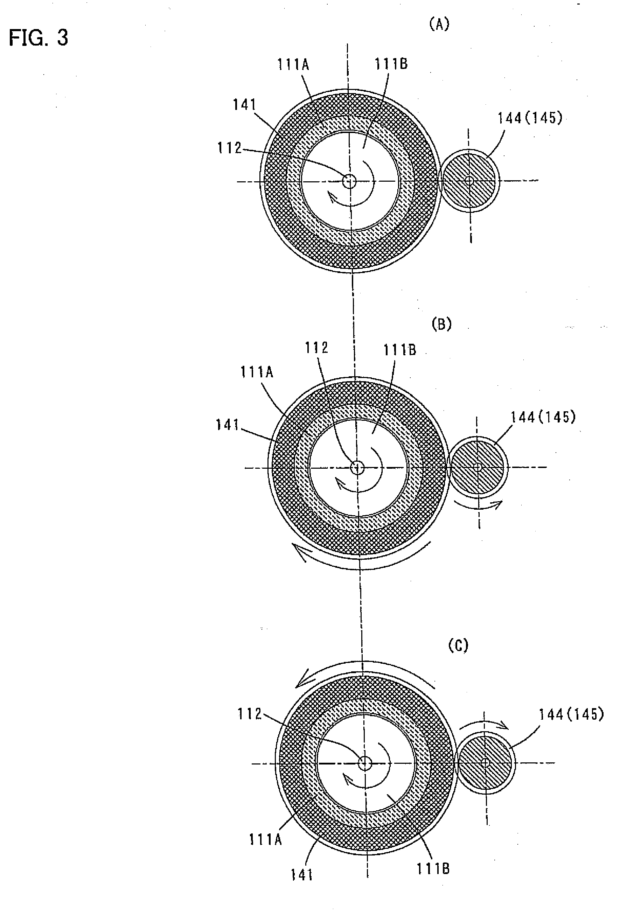

A first embodiment of the present invention is now described with reference to FIGS. 1 and 3. In this embodiment, a rechargeable electric screwdriver is explained as a representative example of a hand-held power tool. As shown in FIG. 1, the electric screwdriver 101 according to this embodiment mainly includes a body 103 that forms an outer shell of the screwdriver 101, a tool bit in the form of a driver bit 119 detachably coupled to a front end region (on the left as viewed in FIG. 1) of the body 103 via a bit holder 118, and a handgrip (handle) 109 integrally connected to the body 103. The body 103 is a feature that corresponds to the "power tool body" according to the present invention. Further, for the sake of convenience of explanation, the side of the driver bit 119 is taken as the front and its opposite side as the rear.

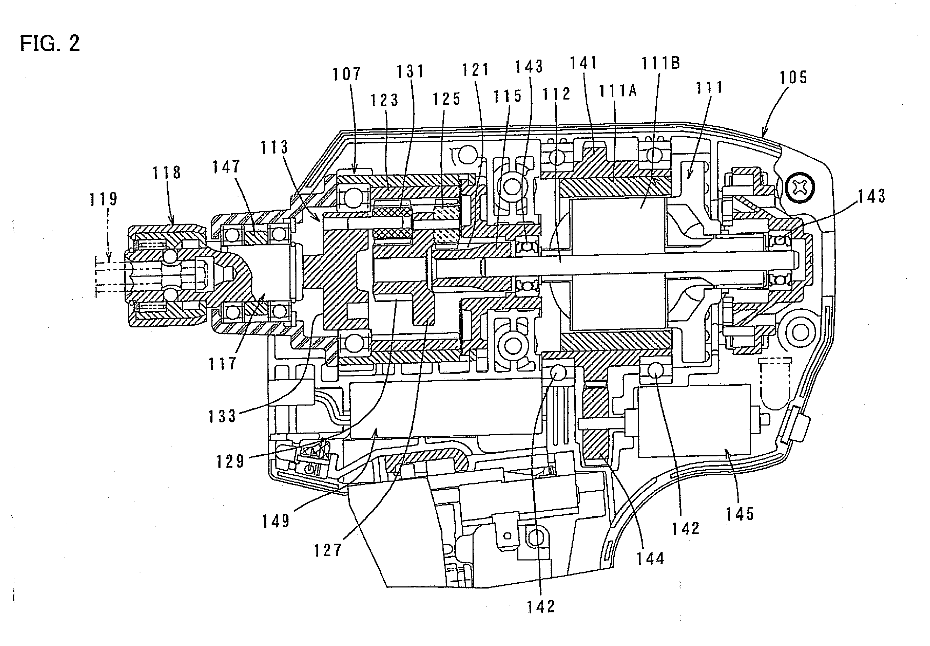

The body 103 mainly includes an inner housing 107 that houses a driving motor 111, a speed reducing mechanism in the form of a planetary gear mechanism 113 which is disposed in front of the driving motor 111 (on the left as viewed in FIGS. 1 and 2) and a spindle 117, and an outer housing 105 that forms the outer shell of the screwdriver 101. The driving motor 111 is a feature that corresponds to the "motor" according to the present invention. The outer housing 105 has a two-part structure which is divided into right and left halves, and the right and left halves are connected with each other so as to cover a region of the inner housing 107 other than a tip end region (front end region) of the inner housing 107 which supports the spindle 117. Further, the handgrip 109 extends from the body 103 in a downward direction transverse to a longitudinal direction of the body 103 (an axial direction of the driver bit 119), and a battery pack 108 is detachably mounted on an extending end of the handgrip 109 and contains a battery by which power is supplied to the driving motor 111.

The driving motor 111 is driven when an operating member in the form of a trigger 109a disposed on the handgrip 109 is depressed. As shown in FIG. 2, the rotating output of the driving motor 111 is transmitted from a driving shaft 115 which rotates together with a motor shaft 112, to the spindle 117 via the planetary gear mechanism 113 and then transmitted to the driver bit 119 which is held by the spindle 117 via the bit holder 118. The spindle 117 is a feature that corresponds to the "output part" according to the present invention.

As shown in FIG. 2, the planetary gear mechanism 113 includes a first sun gear 121 that is integrally formed with the driving shaft 115, a cylindrical internal gear (ring gear) 123 that has teeth on an inner wall surface and is fixed to the inner housing 107, a plurality of first planetary gears 125 that revolve around a rotation axis of the first sun gear 121 in engagement with both the first sun gear 121 and the internal gear 123, a first carrier 127 that rotatably supports the first planetary gears 125 and rotates coaxially with the first sun gear 121, a second sun gear 129 that is formed around a rotation axis of the first carrier 127, a plurality of second planetary gears 131 that revolve around a rotation axis of the second sun gear 129 in engagement with both the second sun gear 129 and the internal gear 123, and a second carrier 133 that rotatably supports the second planetary gears 131 and is connected to the spindle 117. The planetary gear mechanism 113 reduces the speed of rotating output ofthe driving shaft 115 and then transmits it to the spindle 117. Further, the planetary gear mechanism 113 according to this embodiment has a two-part structure in which the first carrier 127 for supporting the first planetary gear 125 and the second carrier 133 for supporting the second planetary gear 131 are connected in the axial direction, but it does not necessarily have to be a two-part structure.

The driving motor 111 includes a stator 111A and a rotor 111B. In this embodiment, a DC motor is used as the driving motor 111, and the stator 111A for generating rotational moment in the rotor 111B is formed by a permanent magnet. The stator 111A is cylindrically shaped and a cylindrical driven gear 141 is press-fitted onto the stator 111A. Both axial ends of the driven gear 141 are rotatably supported on the outer housing 105 via bearings 142. Specifically, the driving motor 111 according to this embodiment is constructed such that not only the rotor 111B having a winding rotates together with the motor shaft 112, but the stator 111A is also allowed to rotate. Further, both axial ends of the motor shaft 112 are rotatably supported on the inner housing 107 via bearings 143.

A driving gear 144 which is rotationally driven by an auxiliary motor in the form of a micro motor 145 is engaged with the driven gear 141. Specifically, the stator 111A of the driving motor 111 in this embodiment can be forcibly driven in an active manner by the micro motor 145. The micro motor 145 is a reversible motor that can change the direction of rotation and fixedly disposed in a space below the driving motor 111 within an internal space of the outer housing 105 such that the rotation axis ofthe micro motor 145 extends parallel to the rotation axis ofthe driving motor 111.

FIG. 3 shows how rotation of the stator 111A is controlled. When the micro motor 145 is stopped (is not rotationally driven), the stator 111A is held in a stopped state. At this time, the spindle 117 steadily rotates at a speed defined by a speed reduction ratio of the planetary gear mechanism 113 which is driven by the rotor 111B of the driving motor 111. This state of steady rotation is shown in FIG. 3(A). Further, the stator 111A receives a reaction force in a circumferential direction when the rotor 111B rotates. When the micro motor 145 is rotated in an opposite direction (counterclockwise direction in FIG. 3) from the direction of rotation of the rotor 111B (clockwise direction in FIG. 3) (hereinafter also referred to as rotated in the direction of normal rotation), a reaction force receiving member in the form of the stator 111A is rotated in the same direction (clockwise direction in FIG. 3) as the rotor 111B together with the driven gear 141. The rotation speed of the stator 111A with respect to the rotor 111B is constant, so that the rotation speed of the rotor 111B is increased by the rotation speed of the stator 111A. As a result, the rotation speed of the spindle 117 increases with increase of the rotation speed of the rotor 111B. This state of rotation at increased speed is shown in FIG. 3(B). On the other hand, when the micro motor 145 is rotated in the opposite direction (clockwise direction in FIG. 3) from the above-described direction (hereinafter also referred to as rotated in the reverse direction), the stator 111A is rotated together with the driven gear 141 in the opposite direction from the rotor 111B (counterclockwise direction in FIG. 3). The rotation speed ofthe stator 111A with respect to the rotor 111B is constant, so that the rotation speed of the rotor 111B is reduced by the rotation speed of the stator 111A. As a result, contrary to the above-described rotation at increased speed, the rotation speed of the spindle 117 decreases with decrease of the rotation speed of the rotor 111B. This state ofrotation at reduced speed is shown in FIG. 3(C).

According to this embodiment, as described above, by holding the micro motor 145 in the stopped state, or by forcibly driving the micro motor 145 in the direction of normal or reverse rotation, rotation of the stator 111A of the driving motor 111 is controlled, so that the rotation speed of the rotor 111B and thus the spindle 117 can be controlled. The micro motor 145 is a feature that corresponds to the "output changing part" and the "driving source" according to the present invention and is also the "rotation control part for controlling rotation of a reaction force receiving member" according to the present invention.

As shown in FIG. 2, a torque sensor 147 is disposed in a front end region of the inner housing 107 and detects torque in a rotation transmitting path from the internal gear 123 to the driver bit 119 during tightening operation. The torque sensor 147 is a feature that corresponds to the "state detecting part" and the "torque sensor" according to the present invention and includes any type of torque sensors capable of detecting torque. In this embodiment, the torque sensor 147 detects torque acting on the spindle 117, and the torque value detected by the torque sensor 147 is outputted to a controller 149. The controller 149 is provided as a means for controlling the driving motor 111 and the micro motor 145.

In the electric screwdriver 101 constructed as described above, in order to perform an operation of tightening a fastener in the form of a screw or a bolt (hereinafter referred to as a fastener), when the user depresses the trigger 109a with the fastener pressed against a workpiece to be worked on via the driver bit 119 and energizes the driving motor 111, the spindle 117 is rotationally driven via the planetary gear mechanism 113. Then, the fastener tightening operation can be performed via the driver bit 119 which rotates together with the spindle 117.

In the above-described fastener tightening operation, in this embodiment, when the trigger 109a is depressed, the driving motor 111 is energized via the controller 149. At the same time, the micro motor 145 is driven in the direction of normal rotation at a constant speed, so that the stator 111A of the driving motor 111 is actively rotated in the same direction as the rotor 111B. At this time, as described above, the rotation speed of the spindle 117 is increased. Therefore, according to this embodiment, under a low load (low torque) state in which the fastener is not yet seated on the workpiece, the driver bit 119 coupled to the spindle 117 can be rotated at a constant speed faster than that of steady rotation. Thus, the fastener tightening operation can be quickly performed and the time required for the fastener tightening operation can be shortened.

Further, in this embodiment, tightening torque caused during the fastener tightening operation is detected by the torque sensor 147 and then inputted to the controller 149. When this detected torque value exceeds a set value, the micro motor 145 is driven in the direction of reverse rotation via the controller 149. When the micro motor 145 is driven in the direction of reverse rotation based on torque change detected by the torque sensor 147, the micro motor 145 is controlled to rotationally drive the stator 111A such that the rotation speed of the spindle 117 or the rotor 111B is reduced finally to zero.

Therefore, when the fastener tightening operation proceeds and the head of the fastener is seated on the workpiece, the torque acting on the spindle 117 exceeds a set value. At this time, the micro motor 145 is driven in the direction of reverse rotation (the direction of speed reduction) to rotationally drive the internal gear 123 such that the rotation speed of the spindle 117 or the rotor 111B is reduced to zero. In this manner, the tightening operation by the driver bit 119 can be finished. Thus, according to this embodiment, near the end of the tightening operation or after the fastener is seated on the workpiece, the rotation speed of the spindle 117 is controlled to be steplessly reduced to zero, so that the fastener can be tightened to a desired torque value and the tightening operation can be finished. Therefore, the tightening operation can be smoothly performed without abrupt torque change which may be caused if a mechanical clutch is used to interrupt power transmission so as to finish the tightening operation. In this case, as for the manner of steplessly reducing the rotation speed of the spindle 117 to zero, it may be constructed such that the speed of the spindle 117 is reduced at a constant rate or such that it is reduced at varying rates.

Further, when the fastener tightening operation is finished, even if the user continues to depress the trigger 109a, each of the driving motor 111 and the micro motor 145 is stopped. Specifically, as for stoppage of the driving motor 111 and the micro motor 145, it may be constructed by using a stoppage detecting part formed, for example, by a timer such that both the motors 111, 145 can be controlled to stop when a predetermined time elapses since the torque sensor 147 detects the set torque value. Alternatively, it may be constructed by using a stoppage detecting part formed, for example, by a speed sensor or an acceleration sensor such that both the motors 111, 145 can be controlled to stop when the sensor detects stoppage of the spindle 117.

Further, the torque sensor 147 is not only used for controlling the micro motor 145 by detecting torque change caused when the fastener is seated on the workpiece, but can also be used for detecting an abnormal status condition of the tightening operation. Specifically, when the fastener tightening torque abnormally increases for any cause during the fastener tightening operation and exceeds a set value, like in the above-described case, the micro motor 145 can be driven in the direction of reverse rotation (in the direction of speed reduction) to actively rotate the stator 111A such that the rotation speed of the spindle 117 is reduced to zero. Thus, the fastener tightening operation can be stopped halfway.

In a construction in which a mechanical clutch mechanism is provided between the driving shaft 115 driven by the driving motor 111 and the spindle 117 to which the driver bit 119 is coupled and the clutch mechanism is actuated to cut off power when the tightening torque exceeds a predetermined set value after the fastener is seated on the workpiece, the size of the body 103 is increased in its longitudinal direction due to the arrangement in which the clutch mechanism is disposed between the driving shaft 115 and the spindle 117 in series. According to this embodiment, however, by provision of the system in which the micro motor 145 controls rotation of the stator 111A of the driving motor 111, the micro motor 145 can be disposed in parallel to the driving motor 111 below the driving motor 111 in the internal space of the outer housing 105. As a result, the size of the body 103 in the longitudinal direction is reduced, and thus the distance from the handgrip 109 to the driver bit 119 is shortened so that fastener tightening operation becomes easier for the user.

Further, in this embodiment, it is constructed such that, when the user depresses the trigger 109a, the driving motor 111 is driven and at the same time, the micro motor 145 is driven in the direction that increases the rotation speed of the spindle 117. A switch for controlling the micro motor may however be additionally provided separately from the trigger 109a such that the micro motor 145 can be selectively switched between a stopped state in which the micro motor 145 is held in a stopped state and a speed increasing state, or among the stopped state, the speed increasing state and a speed reducing state, by the switch, and when the user selects any one of these states and depresses the trigger 109a to energize the driving motor 111, the micro motor 145 is controlled to be in the selected state.

### (Second Embodiment of the Invention)

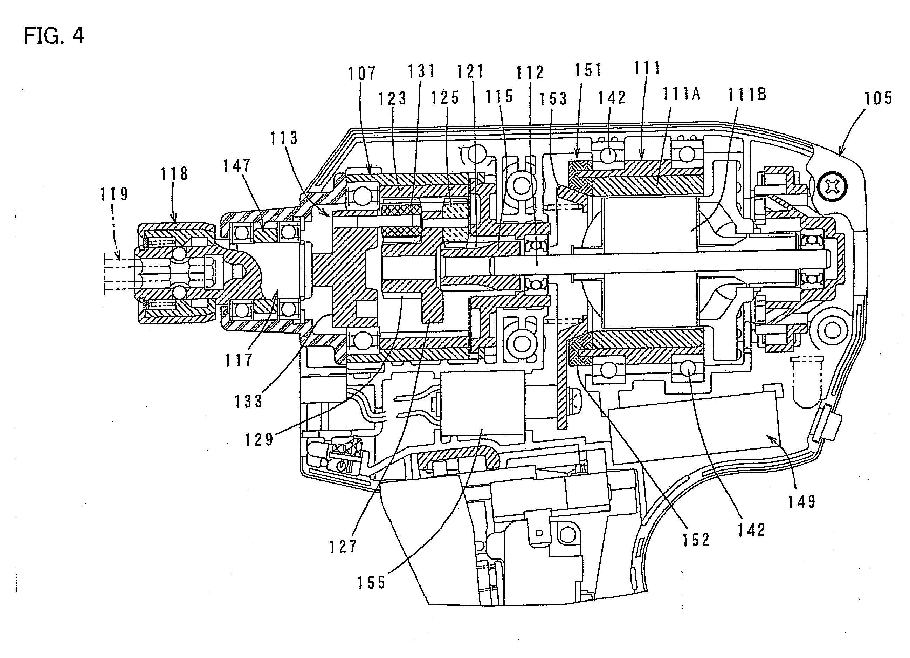

A second embodiment of the present invention is now explained with reference to FIGS. 4 to 7. In this embodiment, in place of the forced drive system for forcibly driving the stator 111A by the auxiliary motor in the form ofthe micro motor 145 in the above-described first embodiment, the stator 111A of the driving motor 111 is controlled by switching between a locked state in which rotation of the stator 111A is prevented by using frictional resistance and a rotation allowed state in which rotation of the stator 111A is allowed by releasing the rotation prevention. In the other points, this embodiment has the same construction as the above-described first embodiment. Therefore, components which are substantially identical to those in the first embodiment are given like numerals as in the first embodiment and are not described or only briefly described.

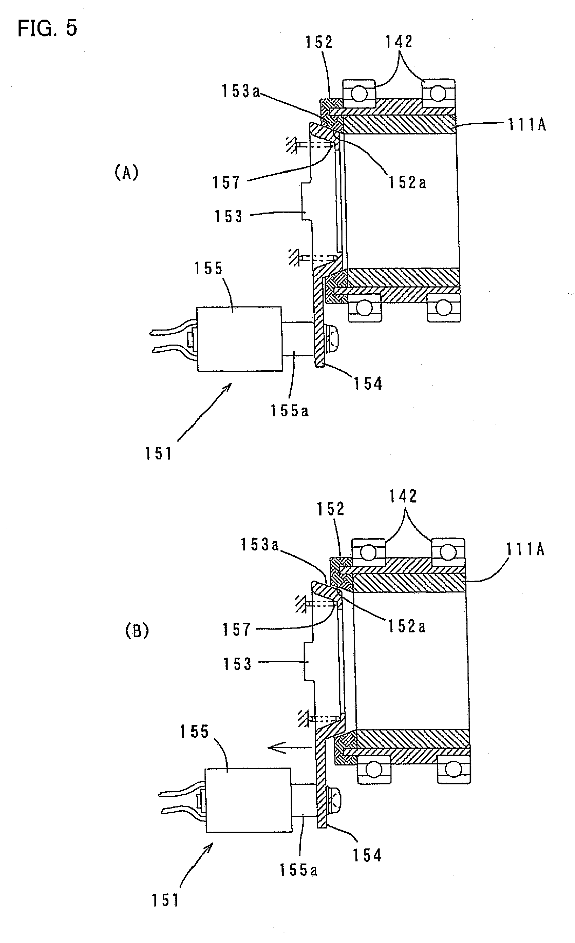

In this embodiment, a braking device 151 is provided as a means which holds the stator 111A so as not to rotate (prevents the stator 111A from rotating) by applying rotational resistance to the stator 111A and allows rotation of the stator 111A by releasing the rotational resistance applied to the stator 111A. As shown in FIGS. 4 and 5, the braking device 151 is conically shaped and disposed on one axial end of the cylindrical stator 111A, and prevents rotation of the stator 111A by contact with the one end of the stator 111A in its axial direction. The braking device 151 is a feature that corresponds to the "output changing part", the "rotation control part for controlling rotation of a reaction force receiving member" and the "stator rotational resistance control part" according to the present invention.

The braking device 151 mainly includes a circular brake ring 152 fixed to the one axial end of the stator 111A, a ring-shaped brake shoe 153 that is opposed to the brake ring 152 on the same axis, and a solenoid 155 that actuates to move the brake shoe 153 into contact with the brake ring 152 or away from the brake ring 152. Further, each of contact surfaces 152a, 153a of the brake ring 152 and the brake shoe 153 which are opposed to each other is formed by a conical tapered surface.

The brake shoe 153 opposed to the brake ring 152 is constantly biased by a biasing spring 157 such that its contact surface 153a is held in contact with a contact surface 152a of the brake ring 152. This state is shown in FIG. 5(A). The biasing spring 157 comprises a compression coil spring and is disposed between the brake shoe 153 and a wall surface ofthe outer housing 105. An arm part 154 extends radially outward from part of an outer circumference of the brake shoe 153, and a movable core 155a ofthe solenoid 155 is connected to the arm part 154.

The solenoid 155 is a plunger-type electromagnet having a rod-like movable core 155a which is caused to rectilinearly move in the longitudinal direction (the axial direction of the driver bit 119) by energizing or de-energizing an exciting coil of a cylindrical solenoid body. The solenoid 155 is fixed to the outer housing 105 such that its longitudinal axis extends in parallel to the longitudinal axis of the stator 111A. The solenoid 155 actuates based on a detection signal outputted from the torque sensor 147 which detects torque acting on the spindle 117. Specifically, when the torque sensor 147 detects a set torque value, the movable core 155a is caused to rectilinearly move by energization of the exciting coil based on a command from the controller 149. As a result, the brake shoe 153 is separated from the brake ring 152 and rotation prevention ofthe stator 111A is released. This state is shown in FIG. 5(B).

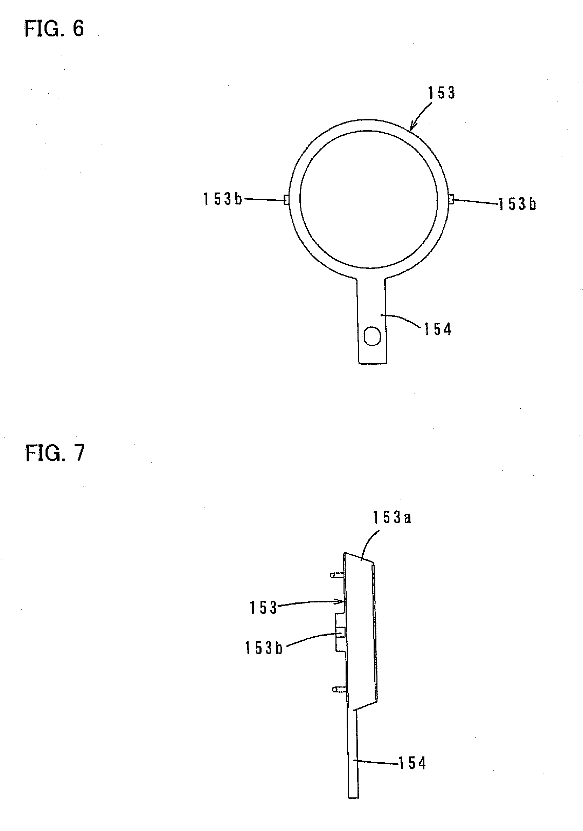

Further, as shown in FIGS. 6 and 7, the brake shoe 153 has rotation locking projections (claws) 153b formed in symmetrical positions about its axis on its outer circumferential surface. Although not shown, each of the projections 153b is slidably engaged with a guide groove which is formed in the wall surface of the outer housing 105 and extends in the axial direction of the driver bit 119. With such a construction, the brake shoe 153 can be pressed against the brake ring 152 with stability.

In the braking device 151 constructed as described above, the exciting coil of the solenoid 155 is normally in a de-energized state. Therefore, the brake shoe 153 is held in pressed contact with the brake ring 152 by the spring force of the biasing spring 157 and locks the stator 111A against rotation. Therefore, in this state, when the driving motor 111 is energized by depressing the trigger 109a in order to perform a fastener tightening operation, the rotating output of the driving motor 111 is transmitted to the spindle 117 via the planetary gear mechanism 113. Thus, the tightening operation is started at the speed of steady drive of the driving motor 111 by the driver bit 119 held by the spindle 117.

When the fastener tightening operation proceeds and the head of the fastener is seated on the workpiece, the tightening torque increases. At this time, when the reaction force acting on the stator 111A exceeds the frictional force between the contact surfaces 153a, 152a of the brake shoe 153 and the brake ring 152, the brake shoe 153 is caused to slide with respect to the brake ring 152, so that the stator 111A begins to rotate in the opposite direction from the direction of rotation of the rotor 111B. Specifically, the state as shown in FIG. 3(C) is caused. Therefore, the rotation speed of the spindle 117 is reduced from high speed to low speed. This state is also referred to as half clutch.

When the fastener tightening torque value further increases and exceeds the set value, the exciting coil of the solenoid 155 is energized via the torque sensor 147 and the controller 149. Thus, the movable core 155a moves against the biasing force of the biasing spring 157, so that the brake shoe 153 is separated from the brake ring 152. Therefore, the stator 111A is released and allowed to rotate. As a result, the rotor 111B acted upon by load stops rotating and the reaction force receiving member or the stator 111A rotates, so that the spindle 117 stops rotating. In this manner, the fastener tightening operation is finished. Further, after the fastener tightening operation is finished, like in the first embodiment, the driving motor 111 is stopped (the winding of the rotor 111B is de-energized) and the exciting coil of the solenoid 155 is de-energized.

As described above, according to this embodiment, during fastener tightening operation, until the fastener is seated on the workpiece after start of the tightening operation, the braking device 151 applies rotational resistance to the stator 111A such that the stator 111A is prevented from rotating. Then, near the end of the tightening operation or after the fastener is seated on the workpiece, rotational resistance applied by the braking device 151 is released such that the stator 111A is allowed to freely rotate. Thus, the fastener can be tightened to a desired torque value and the tightening operation can be finished. With such a construction, like in the first embodiment, the tightening operation can be smoothly performed without abrupt torque change which may be caused in a construction in which power transmission is interrupted by using a mechanical clutch in order to finish the tightening operation.

Further, according to this embodiment, with the construction in which the braking device 151 is used as a means for applying rotational resistance to the stator 111A and the ring-shaped brake shoe 153 is moved in the axial direction and pressed against the circular surface of the one axial end of the stator 111A in its entirety in the circumferential direction, the stator 111A can be held with stability.

In the second embodiment, rotation of the stator 111A is prevented by utilizing frictional resistance of the braking device 151, but in place of this construction, a rotation stopper may be used which prevents rotation of the stator 111A by engagement with the stator 111A in its circumferential direction and allows rotation of the stator 111A by retracting in the axial direction or radial direction and releasing the above-described engagement. Further, in order to prevent the stator 111A from rotating by utilizing frictional resistance, in place of the structure of pressing and holding the stator 111A in its axial direction, a structure of pressing and holding the stator 111A in the radial direction may be used.

### (Third Embodiment of the Invention)

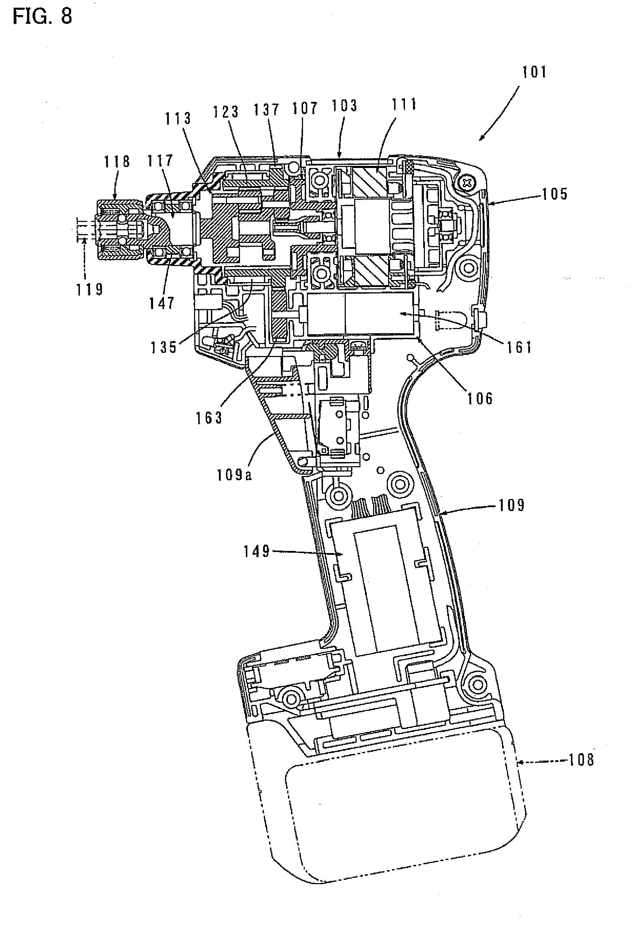

A third embodiment of the present invention is now explained with reference to FIGS. 8 to 12. This embodiment is changed from the system of forcibly driving the stator 111A of the driving motor 111 in the above-described first embodiment to a system of forcibly driving the reaction force receiving member in the form of the internal gear 123 in the planetary gear mechanism 113. In the other points, this embodiment has the same construction as the first embodiment. Therefore, components which are substantially identical to those in the first embodiment are given like numerals as in the first embodiment and are not described or only briefly described.

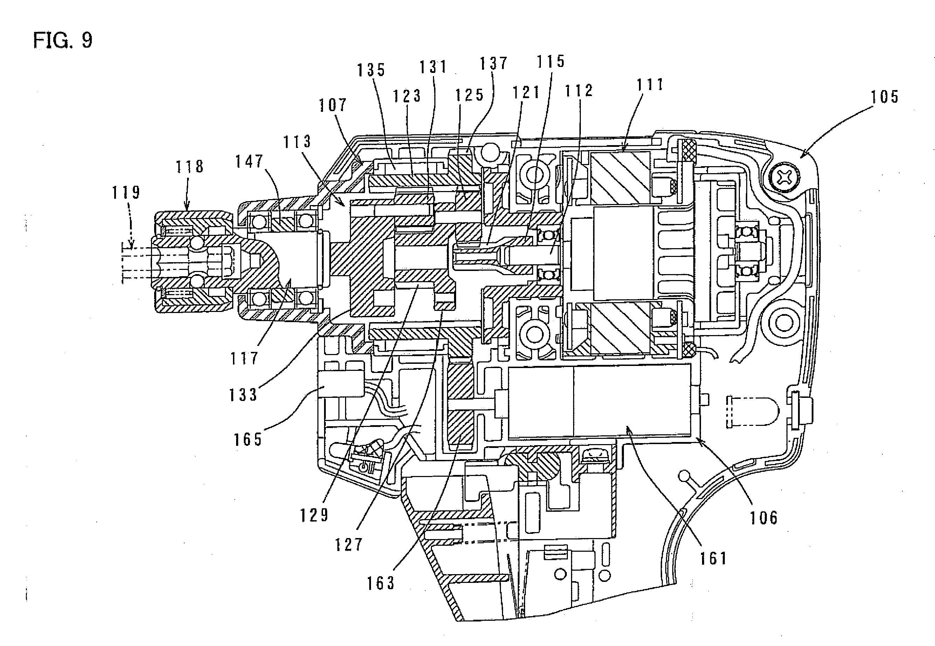

In this embodiment, as shown in FIGS. 8 and 9, an outer periphery of the internal gear 123 is rotatably supported on the body 103 (the outer housing 105 or the inner housing 107) via a bearing (needle bearing) 135. Further, external teeth 137 are formed in part of the outer periphery of the internal gear 123 in the longitudinal direction, and engaged with a driving gear 163 which is rotationally driven by a micro motor 161 provided as an auxiliary motor. Specifically, the internal gear 123 of this embodiment can be actively driven by the micro motor 161. The micro motor 161 is a reversible motor capable of changing the direction of rotation and disposed, in a housing part 106 formed in a space below the driving motor 111 within the internal space of the outer housing 105, such that its rotation axis extends in parallel to the rotation axis of the driving motor 111.

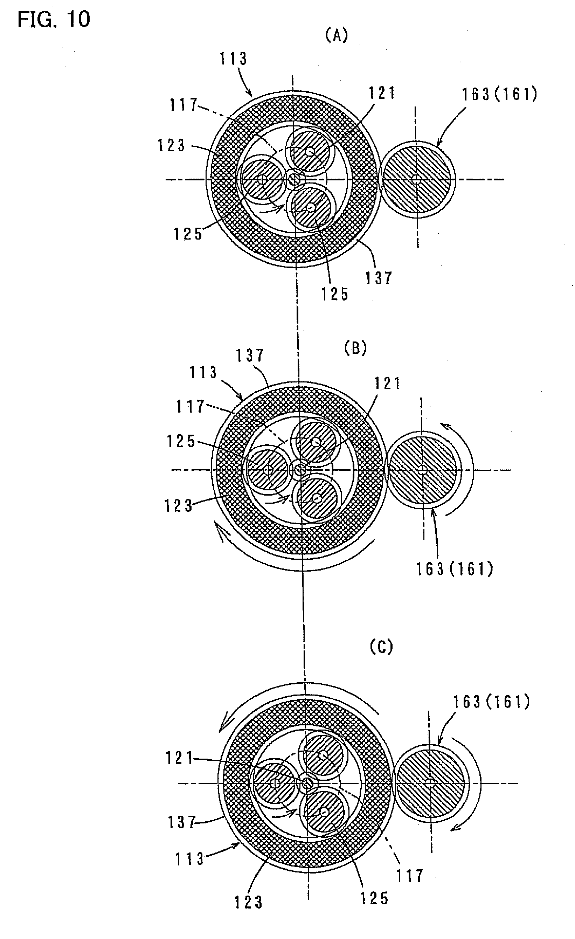

FIG. 10 shows how rotation of the internal gear 123 is controlled. When the micro motor 161 is stopped (is not rotationally driven), the internal gear 123 is held in a stopped state. At this time, the spindle 117 steadily rotates at a speed defined by the speed reduction ratio of the planetary gear mechanism 113 which is driven via the driving shaft 115 by the driving motor 111. This state of steady rotation is shown in FIG. 10(A). Further, the internal gear 123 receives a reaction force in the circumferential direction when the planetary gears 125, 131 revolve around the sun gears 121, 129. When the micro motor 161 is rotated in the opposite direction (counterclockwise direction in FIG. 10) from the direction of rotation (clockwise direction in FIG. 10) of the sun gears 121, 129 (hereinafter also referred to as rotated in the normal direction), the reaction force receiving member in the form of the internal gear 123 is rotated in the same direction (clockwise direction in FIG. 10) as the direction of rotation of the sun gears 121, 129. Therefore, the rotation speeds of the planetary gears 125, 131 around the sun gears 121, 129 are increased by the rotation speed of the internal gear 123, so that the rotation speed of the spindle 117 increases. This state of rotation at increased speed is shown in FIG. 10 (B). On the other hand, when the micro motor 161 is rotated in the opposite direction (clockwise direction in FIG. 10) from the above-described direction (hereinafter also referred to as rotated in the reverse direction), the rotation speeds of the planetary gears 125, 131 around the sun gears 121, 129 are reduced by the rotation speed of the internal gear 123, so that the rotation speed of the spindle 117 decreases. This state of rotation at reduced speed is shown in FIG. 10(C). The driving shaft 115 and the spindle 117 are features that correspond to the "driving shaft" and the "driven shaft", respectively, according to the present invention.

As described above, according to this embodiment, by holding the micro motor 161 in the stopped state, or by forcibly driving the micro motor 161 in the direction of normal or reverse rotation, rotation of the internal gear 123 of the planetary gear mechanism 113 can be controlled, so that the rotation speed of the spindle 117 can be controlled. The micro motor 161 is a feature that corresponds to the "output changing part", the "internal gear control part" and the "driving source" according to the present invention.

In the electric screwdriver 101 constructed as described above, in order to perform an operation of tightening a fastener in the form of a screw or a bolt (hereinafter referred to as a fastener), when the user depresses the trigger 109a with the fastener pressed against a workpiece to be worked on via the driver bit 119 and energizes the driving motor 111, the spindle 117 is rotationally driven via the planetary gear mechanism 113. Then, the fastener tightening operation can be performed via the driver bit 119 which rotates together with the spindle 117.

In the above-described fastener tightening operation, in this embodiment, when the trigger 109a is depressed, the driving motor 111 is energized via the controller 149. At the same time, the micro motor 161 is driven in the direction of normal rotation at a constant speed, so that the internal gear 123 is actively rotated in the same direction as the direction of rotation of the sun gear 121. At this time, as described above, the rotation speed of the spindle 117 is increased. Therefore, according to this embodiment, under a low load (low torque) state in which the fastener is not yet seated on the workpiece, the driver bit 119 coupled to the spindle 117 can be rotated at a constant speed faster than that of steady rotation. Thus, the fastener tightening operation can be quickly performed and the time required for the fastener tightening operation can be shortened.

Further, in this embodiment, tightening torque caused during the fastener tightening operation is detected by the torque sensor 147 and then inputted to the controller 149. When this detected torque value exceeds a set value, the micro motor 161 is driven in the direction of reverse rotation via the controller 149. When the micro motor 161 is driven in the direction of reverse rotation based on torque change detected by the torque sensor 147, the micro motor 161 is controlled to rotationally drive the internal gear 123 such that the rotation speed of the spindle 117 is reduced finally to zero. The torque sensor 147 is a feature that corresponds to the "state detecting part" and the "torque detecting part" according to the present invention and includes any type of torque sensors capable of detecting torque. The controller 149 is provided as a means for controlling the driving motor 111 and the micro motor 161.

Therefore, when the fastener tightening operation proceeds and the head of the fastener is seated on the workpiece, the torque acting on the spindle 117 exceeds a set value. At this time, the micro motor 161 is driven in the direction of reverse rotation (the direction of speed reduction) to rotationally drive the internal gear 123 such that the rotation speed of the spindle 117 is reduced to zero. In this manner, the tightening operation by the driver bit 119 can be finished. Thus, according to this embodiment, near the end of the tightening operation or after the fastener is seated on the workpiece, the rotation speed ofthe spindle 117 is controlled to be steplessly reduced to zero, so that the fastener can be tightened to a desired torque value and the tightening operation can be finished. Therefore, the tightening operation can be smoothly performed without abrupt torque change which may be caused if a mechanical clutch is used to interrupt power transmission in order to finish the tightening operation. In this case, as for the manner of steplessly reducing the rotation speed of the spindle 117 to zero, it may be constructed such that the speed of the spindle 117 is reduced at a constant rate or such that it is reduced at varying rates.

Further, when the fastener tightening operation is finished, even if the user continues to depress the trigger 109a, each of the driving motor 111 and the micro motor 161 is stopped. Specifically, as for stoppage of the driving motor 111 and the micro motor 161, it may be constructed by using a stoppage detecting part formed, for example, by a timer such that both the motors 111, 161 can be controlled to stop when a predetermined time elapses since the torque sensor 147 detects the set torque value. Alternatively, it may be constructed by using a stoppage detecting part formed, for example, by a speed sensor or an acceleration sensor such that both the motors 111, 161 can be controlled to stop when the stoppage detecting part detects stoppage of the spindle 117.

Further, the torque sensor 147 is not only used for controlling the micro motor 161 by detecting torque change caused when the fastener is seated on the workpiece, but can also be used for detecting an abnormal status condition of the tightening operation. Specifically, when the fastener tightening torque abnormally increases for any cause during the fastener tightening operation and exceeds a set value, like in the above-described case, the micro motor 161 can be driven in the direction of reverse rotation (in the direction of speed reduction) to actively rotate the internal gear 123 such that the rotation speed of the spindle 117 is reduced to zero. Thus, the fastener tightening operation can be stopped halfway.

Further, the electric screwdriver 101 according to this embodiment can be provided with a distance sensor 165 separately from the torque sensor 147. As the distance sensor 165, for example, an optical or ultrasonic sensor is used. As shown in FIG. 9, the distance sensor 165 is disposed within a front end region of the outer housing 105 and measures the distance from the head of the fastener S to the surface of the workpiece based on the time for light or ultrasound emitted onto the workpiece W to reflect off the workpiece W and return to the distance sensor. The distance sensor 165 is a feature that corresponds to the "state detecting part for detecting a predetermined operating state" according to the present invention.

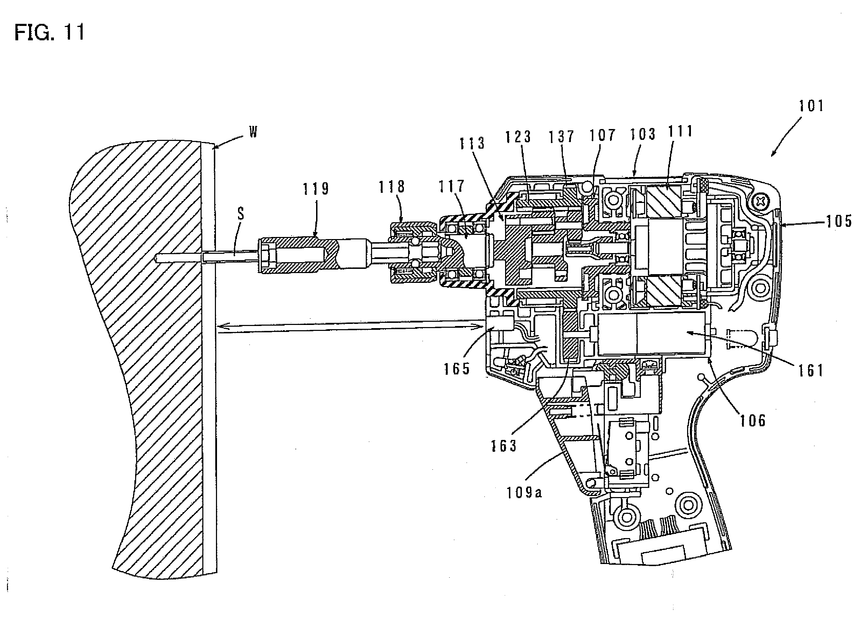

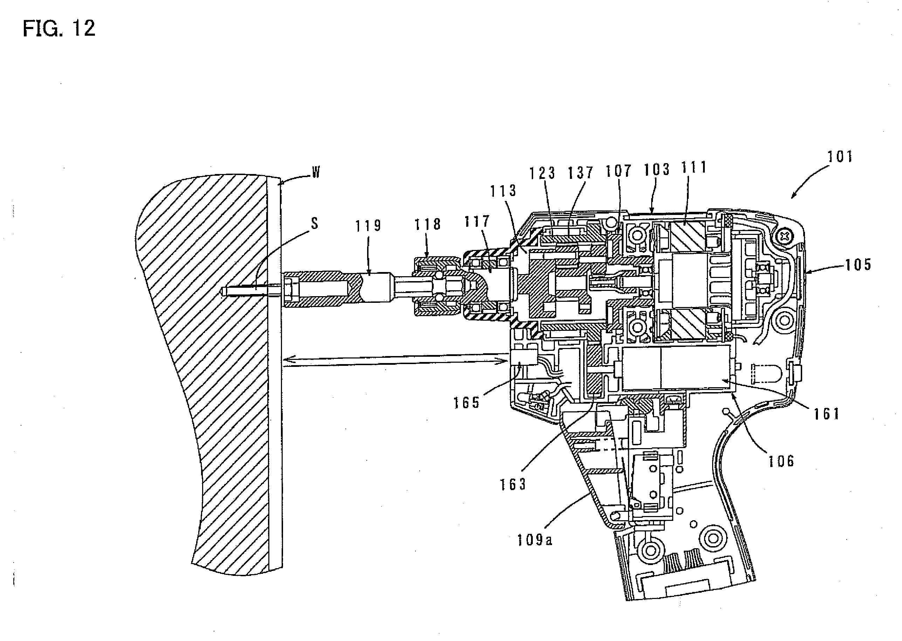

FIG. 11 shows a state in which the head of the fastener S is not yet seated on the surface of the workpiece W. In this state, the micro motor 161 is controlled to be rotationally driven in the direction that increases the rotation speed of the spindle 117 (in the direction of normal rotation). When the distance sensor 165 detects that the fastener S is seated on the workpiece W, this detection signal is inputted to the controller 149. Then, based on the input, the micro motor 161 is driven via the controller 149 in the direction of speed reduction (in the direction of reverse rotation) to rotationally drive the internal gear 123 such that the rotation speed of the spindle 117 is reduced to zero. FIG. 12 shows a state in which the fastener S is seated. In this manner, the rotation speed of the spindle 117 can be steplessly reduced to zero, so that the fastener S can be tightened to a desired torque value and the tightening operation can be finished. When the tightening operation is finished, both the driving motor 111 and the micro motor 161 are stopped.

In a construction in which a mechanical clutch mechanism is provided between the driving shaft 115 driven by the driving motor 111 and the spindle 117 to which the driver bit 119 is coupled and the clutch mechanism is actuated to cut off power when the tightening torque exceeds a predetermined set torque value after the fastener is seated on the workpiece, the size of the body 103 is increased in its longitudinal direction due to the arrangement in which the clutch mechanism is disposed between the driving shaft 115 and the spindle 117 in series. According to this embodiment, however, by provision of the system in which the micro motor 161 controls the internal gear 123, the micro motor 161 can be disposed in parallel to the driving motor 111 below the driving motor 111 in the internal space of the outer housing 105. As a result, the size of the body 103 in the longitudinal direction is reduced, and thus the distance from the handgrip 109 to the driver bit 119 is shortened so that the fastener tightening operation becomes easier for the user.

Further, in this embodiment, it is constructed such that, when the user depresses the trigger 109a, the driving motor 111 is driven and at the same time, the micro motor 161 is driven in the direction that increases the rotation speed of the spindle 117. A switch for controlling the micro motor may however be additionally provided separately from the trigger 109a such that the micro motor 161 can be selectively switched between a stopped state in which the micro motor 161 is held in a stopped state and a speed increasing state, or among the stopped state, the speed increasing state and a speed reducing state, by the switch, and when the user selects any one of these states and depresses the trigger 109a to energize the driving motor 111, the micro motor 161 is controlled to be in the selected state.

### (Fourth Embodiment of the Invention)

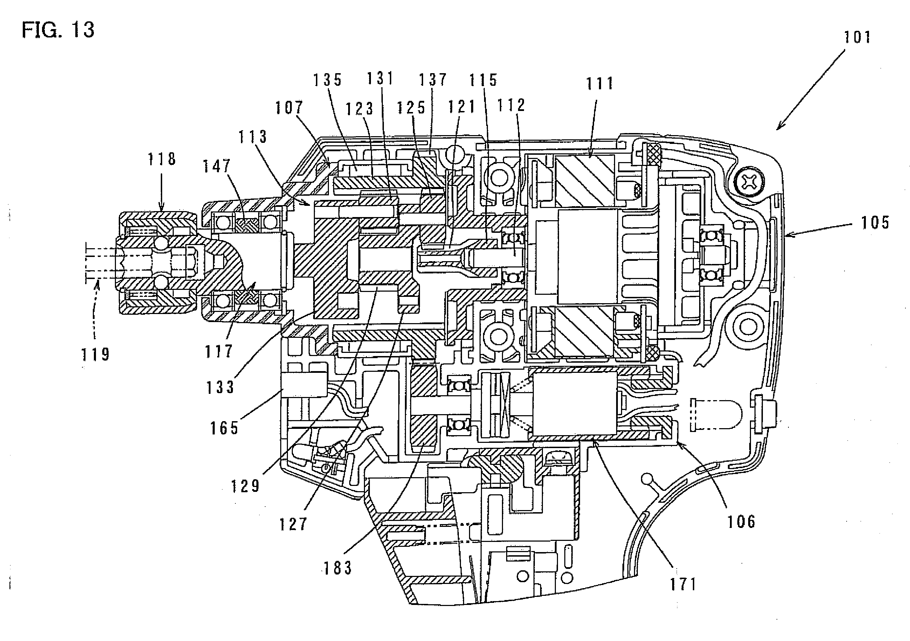

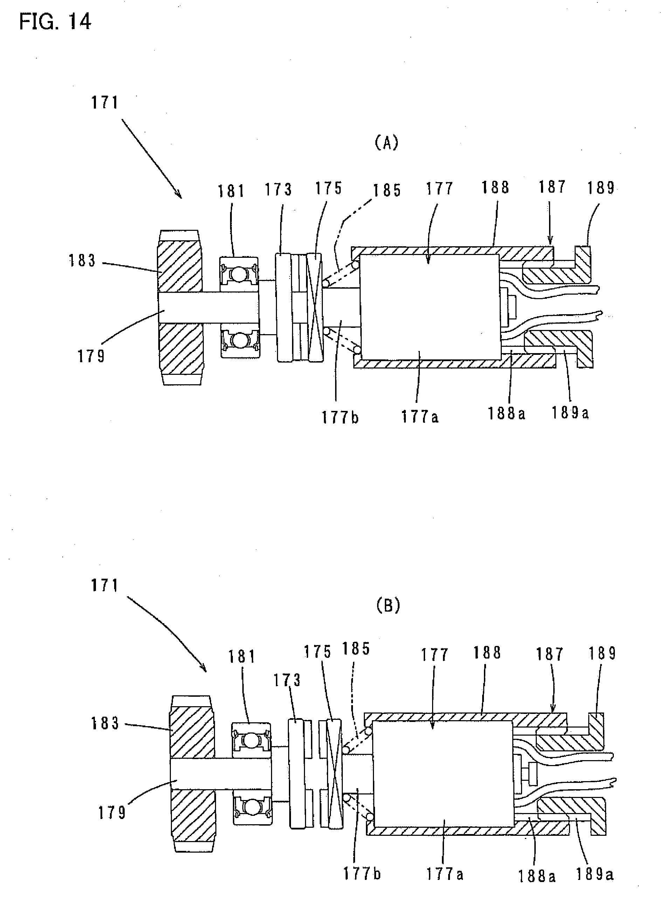

A fourth embodiment of the present invention is now explained with reference to FIGS. 13 and 14. In this embodiment, in place of the active forced drive system using the auxiliary motor in the form of the micro motor 161 in the above-described third embodiment, the internal gear 123 of the planetary gear mechanism 113 is controlled by switching between a locked state in which rotation of the internal gear 123 is prevented by using friction resistance and a rotation allowed state in which rotation of the internal gear 123 is allowed by releasing the rotation prevention. In the other points, this embodiment has the same construction as the above-described third embodiment. Therefore, components which are substantially identical to those in the third embodiment are given like numerals as in the third embodiment and are not described or only briefly described.

In this embodiment, as shown in FIG. 13, a friction clutch device 171 is provided as a means which holds the internal gear 123 so as not to rotate (prevents the internal gear 123 from rotating) by applying rotational resistance to the internal gear 123 and allows rotation of the internal gear 123 by releasing the rotational resistance applied to the internal gear 123. The friction clutch device 171 is disposed, in the housing part 106 formed in a space below the driving motor 111 within the outer housing 105, such that its direction of movement (the direction of the longitudinal axis) is parallel to the rotation axis of the driving motor 111. The friction clutch device 171 is a feature that corresponds to the "output changing part", the "internal gear control part" and the "internal gear rotational resistance control part" according to the present invention.

The friction clutch device 171 is shown in enlarged view in FIG. 14. As shown in the drawing, the friction clutch device 171 mainly includes a movable-side friction clutch plate 173 connected to the internal gear 123, a fixed-side friction clutch plate 175 opposed to the movable-side friction clutch plate 173 and a solenoid 177 that actuates to move the fixed-side friction clutch plate 175 into contact with the movable-side friction clutch plate 173 or away from the movable-side friction clutch plate 173. A clutch shaft 179 is disposed in parallel to the rotation axis of the internal gear 123 within the housing part 106. The clutch shaft 179 is rotatably mounted to the housing part 106 via a bearing 181, and the movable-side friction clutch plate 173 is fixed to one axial end of the clutch shaft 179 and a gear 183 engaged with the external teeth 137 of the internal gear 123 is fixed to the other axial end of the clutch shaft 179. In this manner, the movable-side friction clutch plate 173 is connected to the internal gear 123.

The solenoid 177 is a plunger-type electromagnet having a cylindrical solenoid body 177a around which an exciting coil is wound and a rod-like movable core 177b which is caused to rectilinearly move in the longitudinal direction of the solenoid body 177a (the axial direction of the driver bit 119) by energizing or de-energizing the exciting coil. The fixed-side friction clutch plate 175 is fixed to a front end of the movable core 177b. The fixed-side friction clutch plate 175 is constantly biased elastically in a direction toward the movable-side friction clutch plate 173 by a clutch spring in the form of a coil spring 185. When a torque sensor 147 for detecting the tightening torque and inputting it to the controller 149 detects a set torque value, the exciting coil of the solenoid 177 is energized based on a command from the controller 149, so that the fixed-side friction clutch plate 175 is separated from the movable-side friction clutch plate 173

In the friction clutch device 171 constructed as described above, the exciting coil of the solenoid 177 is normally in a de-energized state. Therefore, the fixed-side friction clutch plate 175 is held in pressed contact with the movable-side friction clutch plate 173 by the spring force of the coil spring 185 and locks the movable-side friction clutch plate 173 against rotation. This state is shown in FIG. 14 (A). Specifically, in a clutch on-state in which the fixed-side friction clutch plate 175 is pressed against the movable-side friction clutch plate 173, the internal gear 123 having the external teeth 137 which are engaged with the gear 183 integrally formed with the movable-side friction clutch plate 173, is held fixed to the body 103 by frictional force (rotational resistance) between the fixed-side friction clutch plate 175 and the movable-side friction clutch plate 173.

Therefore, in this state, when the driving motor 111 is driven by depressing the trigger 109a in order to perform a fastener tightening operation, the rotating output of the driving motor 111 is transmitted to the spindle 117 via the planetary gear mechanism 113. Thus, the tightening operation is started at the speed of steady drive of the driving motor 111 by the driver bit 119 held by the spindle 117.

When the fastener tightening operation proceeds and the head of the fastener is seated on the workpiece, the tightening torque increases and the reaction force acting on the internal gear 123 exceeds the frictional force of the friction clutch device 171. At this time, the fixed-side friction clutch plate 175 and the movable-side friction clutch plate 173 are caused to slide on their frictional contact surfaces with respect to each other, so that the internal gear 123 begins to rotate. Thus, the rotation speed of the spindle 117 is reduced. This state is also referred to as half clutch.

When the fastener tightening torque value further increases and exceeds the set value, the exciting coil of the solenoid 177 is energized via the torque sensor 147 and the controller 149. Thus, the movable core 177b moves against the biasing force of the coil spring 185, so that the fixed-side friction clutch plate 175 is separated from the movable-side friction clutch plate 173. This state is shown in FIG. 14(B). Therefore, the internal gear 123 is released and allowed to rotate. Specifically, the reaction force receiving member in the form ofthe internal gear 123 freely rotates, and consequently, transmission of the rotating output of the driving motor 111 to the spindle 117 is interrupted, so that the spindle 117 stops rotating. In this manner, the fastener tightening operation is finished. Further, after the fastener tightening operation is finished, like in the first embodiment, the driving motor 111 is stopped and the exciting coil of the solenoid 177 is de-energized.

As described above, according to this embodiment, during fastener tightening operation, until the fastener is seated on the workpiece after start of the tightening operation, the friction clutch device 171 applies rotational resistance to the internal gear 123 such that the internal gear 123 is prevented from rotating. Then, near the end of the tightening operation or after the fastener is seated on the workpiece, rotational resistance applied by the friction clutch device 171 is released such that the internal gear 123 is allowed to freely rotate. Thus, the internal gear 123 is caused to function like a clutch, so that the fastener can be tightened to a desired torque value and the tightening operation can be finished. With such a construction, like in the first embodiment, the tightening operation can be smoothly performed without abrupt torque change which may be caused in a construction in which power transmission is interrupted by using a mechanical clutch in order to finish the tightening operation.

Further, in this embodiment, as shown in FIG. 14, a solenoid fixing case 187 is formed by two parts. One of the parts is a cylindrical solenoid holding part 188 that houses and fixes the solenoid body 177a and has a female thread 188a in its one axial end region. The other part is a case fixing part 189 having a male thread 189a which threadably engages with the female thread 188a of the solenoid holding part 188. The solenoid holding part 188 and the case fixing part 189 are assembled together by threadable engagement of the female thread 188a and the male thread 189a. Therefore, the relative positions of the solenoid holding part 188 and the case fixing part 189 can be adjusted in the direction of movement of the solenoid 177 by turning them around the longitudinal axis with respect to each other. Thus, the initial spring force of the coil spring 185 can be appropriately set. Specifically, according to this embodiment, the frictional force of the friction clutch device 171 can be finely adjusted.

Further, according to this embodiment, by provision of the system in which the friction clutch device 171 controls the internal gear 123, the friction clutch device 171 can be disposed in parallel to the driving motor 111 below the driving motor 111 in the internal space of the outer housing 105. As a result, the size of the body 103 in the longitudinal direction is reduced, and thus the distance from the handgrip 109 to the driver bit 119 is shortened so that fastener tightening operation becomes easier for the user.

Further, in the fourth embodiment, rotation of the internal gear 123 is prevented by utilizing frictional resistance of the friction clutch device 171, but in place of this construction, a rotation stopper may be used which prevents rotation of the internal gear 123 by engagement with the internal gear 123 in its circumferential direction and allows rotation of the internal gear 123 by retracting in the axial direction or radial direction and releasing the above-described engagement.

Further, in each of the above-described embodiments, the screwdriver is explained as a representative example of the power tool, but the present invention may also be applied not only to a tightening tool such as a driver for use in a fastener tightening operation and a wrench for use in a bolt/nut tightening operation, but also to a drill for use in a drilling operation, a hammer and a hammer drill for use in a chipping operation and a drilling operation, and a circular saw and an electric cutter for use in a cutting operation in woodworking or metalworking.

In view of the above-described aspects of the invention, following features are also provided.
(1)
   "The power tool as defined in claim 4, wherein the stator rotational resistance control part comprises a braking device, and the braking device has a brake shoe that presses one axial end of the stator in the axial direction and thereby prevents the stator from rotating."

(2)
   "The power tool as defined in claim 5, wherein the driving source for driving the stator comprises an auxiliary motor, and the auxiliary motor is disposed in parallel to the motor in an internal space of the power tool body."

(3)
   "The power tool as defined in (2), wherein the auxiliary motor is energized upon energization of the motor and rotationally drives the stator ofthe motor in a direction that increases the rotation speed of the output part."

(4)
   "The power tool as defined in (2) or (3), comprising a state detecting part for detecting a predetermined operating state of the power tool, wherein the auxiliary motor is stopped together with the motor when a predetermined time elapses since the state detecting part detects the predetermined operating state of the power tool."

(5)
   "The power tool as defined in (2) or (3), comprising a stoppage detecting part for detecting stoppage of the output part, wherein each of the motor and the auxiliary motor is stopped when the stoppage detecting part detects stoppage of the output part."

(6)
   "The power tool as defined in claim 9, wherein the internal gear rotational resistance control part comprises a friction clutch device, and the friction clutch device is disposed in parallel to the motor in an internal space of the power tool body."

(7)
   "The power tool as defined in (6), wherein the friction clutch device has a movable-side friction clutch plate connected to the internal gear, a fixed-side friction clutch plate opposed to the movable-side friction clutch plate, a clutch spring that biases the fixed-side friction clutch plate into pressed contact with the movable-side friction clutch plate in order to prevent rotation of the internal gear, and a solenoid that separates the fixed-side friction clutch plate from the movable-side friction clutch plate against the biasing force of the clutch spring upon energization and thereby releases rotation prevention of the internal gear."

(8)
   "The power tool as defined in claim 10, wherein the driving source comprises an auxiliary motor and the auxiliary motor is disposed in parallel to the motor in an internal space of the power tool body."

(9)
   "The power tool as defined in (8), wherein the auxiliary motor is energized upon energization of the motor and rotationally drives the internal gear in a direction that increases the rotation speed of the driven shaft."

(10)
   "The power tool as defined in (8) or (9), comprising a torque detecting part that detects a torque value in a rotation transmitting path from the internal gear to the tool bit, wherein the auxiliary motor is stopped together with the motor when a predetermined time elapses since the torque detecting part detects a predetermined set torque value."

(11)
   "The power tool as defined in (8) or (9), comprising a stoppage detecting part for detecting stoppage of the driven shaft, wherein each of the motor and the auxiliary motor is stopped when the stoppage detecting part detects stoppage of the driven shaft."

### Description of Numerals

- 101: electric screwdriver (power tool)
- 103: body (power tool body)
- 105: outer housing
- 106: housing part
- 107: inner housing
- 108: battery pack
- 109: handgrip
- 109a: trigger
- 111: driving motor (motor)
- 111A: stator (reaction force receiving member)
- 111B: rotor
- 112: motor shaft
- 113: planetary gear mechanism (speed reducing mechanism)
- 115: driving shaft
- 117: spindle (output part) (driven shaft)
- 118: bit holder
- 119: driver bit (tool bit)
- 121: first sun gear
- 123: internal gear (reaction force receiving member)
- 125: first planetary gear
- 127: first carrier
- 129: second sun gear
- 131: second planetary gear
- 133: second carrier
- 135: bearing
- 137: external teeth
- 141: driven gear
- 142: bearing
- 143: bearing
- 144: driving gear
- 145: micro motor (output changing part) (driving source)
- 147: torque sensor (state detecting part) (torque detecting part)
- 149: controller
- 151: braking device (output changing part) (rotation control part) (stator rotational resistance control part)
- 152: brake ring
- 152a: contact surface
- 153: brake shoe
- 153a: contact surface
- 153b: projection
- 154: arm part
- 155: solenoid
- 155a: movable core
- 157: biasing spring
- 161: micro motor (output changing part)
- 163: driving gear
- 165: distance sensor (state detecting part)
- 171: friction clutch device (output changing part) (internal gear control part) (internal gear rotational resistance control part)
- 173: movable-side friction clutch plate
- 175: fixed-side friction clutch plate
- 177: solenoid
- 177a: solenoid body
- 177b: movable core
- 179: clutch shaft
- 181: bearing
- 183: gear
- 185: coil spring
- 187: solenoid fixing case
- 188: solenoid holding part
- 188a: female thread
- 189: case fixing part
- 189a: male thread

## Claims

1. A power tool comprising:
a motor,
an output part that is rotationally driven by the motor and
an output changing part that steplessly changes speed of output of the output part while steadily driving the motor.

2. The power tool as defined in claim 1, wherein the output changing part comprises a rotation control part that controls rotation of a reaction force receiving member for receiving a reaction force of the output.

3. The power tool as defined in claim 2, comprising a power tool body that houses the motor, wherein the motor has a rotor that rotationally drives the output part and a stator that generates rotational moment in the rotor and is rotatably mounted to the power tool body, and wherein the reaction force receiving member comprises the stator and controls rotation of the output part by controlling rotation of the stator.

4. The power tool as defined in claim 3, comprising a stator rotational resistance control part that controls rotation of the stator by controlling rotational resistance of the stator to the power tool body.

5. The power tool as defined in claim 3, comprising a driving source for driving the stator.

6. The power tool as defined in claim 5, comprising a state detecting part that detects a predetermined operating state of the power tool, wherein, when the state detecting part detects the predetermined operating state, the state detecting part controls rotation of the stator such that the speed of output of the output part is reduced to zero.

7. The power tool as defined in claim 1, wherein:
the power tool comprises an electric tightening tool which performs a fastener tightening operation on a workpiece by rotation of a tool bit around its axis and has a driving shaft that is rotationally driven by the motor, the output part in the form of a driven shaft to which a tool bit can be coupled, and a speed reducing mechanism that transmits rotation of the driving shaft to the driven shaft,
the speed reducing mechanism has an internal gear that is rotatably supported, a sun gear that is rotationally driven by the driving shaft, and a planetary gear that is connected to the driven shaft and revolves around the sun gear in engagement with the sun gear and the internal gear, and
the output changing part comprises an internal gear control part that controls rotation of the driven shaft by controlling rotation of the internal gear.

8. The power tool as defined in claim 7, wherein rotation speed of the driven shaft is controlled to be changed from high speed to low speed when the fastener is turned by the tool bit and seated on the workpiece.

9. The power tool as defined in claim 7 or 8, comprising a power tool body that houses the motor, wherein the internal gear control part comprises an internal gear rotational resistance control part that controls rotational resistance of the internal gear to the power tool body.

10. The power tool as defined in claim 7 or 8, wherein the internal gear control part comprises a driving source that rotationally drives the internal gear.

11. The power tool as defined in claim 10, comprising a torque detecting part that detects a torque value in a rotation transmitting path from the internal gear to the tool bit.

12. The power tool as defined in claim 11, wherein the driving source rotationally drives the internal gear such that the rotation speed of the driven shaft is reduced to zero when the torque detecting part detects a predetermined set torque value.
